# EUROPEAN PATENT SPECIFICATION

(11) **EP 3 445 524 B1**
(45) Date of publication and mention of the grant of the patent: **03.06.2020**
(21) Application number: 17725773.0
(22) Date of filing: 20.04.2017
(51) Int. Cl.: B31B 50/25, B26F 1/38, B31F 1/10

(54) **PROCESS AND DEVICE FOR PREPARING PLATES FOR CYLINDERS TO CREASE ITEMS OF THE PAPER PROCESSING INDUSTRY**
VERFAHREN UND VORRICHTUNG ZUR HERSTELLUNG VON PLATTEN FÜR ZYLINDER ZUM FALTEN VON ARTIKELN DER PAPIERVERARBEITUNGSINDUSTRIE
PROCÉDÉ ET DISPOSITIF DE PRÉPARATION DE PLAQUES POUR DES CYLINDRES POUR LE CALANDRAGE D'ARTICLES DE L'INDUSTRIE PAPETIÈRE

(30) Priority: 21.04.2016 IT UA20162806
(43) Date of publication of application: 27.02.2019
(73) Proprietor: SEI S.p.A., 24035 Curno (IT)
(72) Inventor: FUSTINONI, Ettore, 24035 Curno BG (IT)
(74) Representative: Mignini, Davide Giuseppe
(86) International application number: PCT/IB2017/052273
(87) International publication number: WO 2017/182978

(56) References cited:
- WO-A1-2015/155685
- DE-A1-102010 012 973
- US-A1- 2011 294 913

## Description

### FIELD OF THE INVENTION

The present invention relates to a process and a device for preparing plates for cylinders to crease items of the paper processing industry, as per the preamble of claims 1 and 13. An example of such a process and a device is disclosed by US 2011/0294913 A. It has to be noted immediately that the term "paper processing industry" is herein and in the following used to designate the field of the art providing for the use and transformation of cardboard, card stock, and like materials, for example for making cards, postcards, as well as to be folded to make boxes, receptacles and the like for example for packaging and micro-packaging, from portions of material that are conveniently folded and cut.

### KNOWN PREVIOUS ART

It is known making creasing, i.e. folding lines carried out on cardboards or card stocks, to aid their folding and avoid deformations and cracking. Creases can be made by using projecting profiles and corresponding hollow profiles arranged on metal plates fastened on counter-rotating rollers. The portion of cardboard or card stock to be machined, generally having a rectangular shape, once interposed between the counter-rotating rollers , is shaped by means of the projecting profiles coupling with the respective hollow profiles.

Therefore, in the creasing systems to crease cardboards or card stocks, the use of counter-rotating rollers on whose surfaces projecting profiles and respective hollows are arranged is known.

Document US 2004/0214703 describes a creasing machine provided with two counter-rotating cylinders accommodating flexible metal plates that, in their turn, have projections and hollows adapted to crease cardboards and card stocks.

One of the cylinders is provided with projections, whereas the opposing cylinder is provided with seats or hollows (and in general recesses) corresponding to said projections. Projections and hollows cooperate to crease cardboards or card stocks.

In such a machine the metal plate provided with the projections is, for example, magnetically adhered to the first cylinder and the second plate, provided with the hollows, is adhered to the second cylinder.

Such machines have the drawback of being little versatile, since the projections/hollows are made in one piece with the plates used on the counter-rotating cylinders and thus require the complete replacement of the plate having a different arrangement of projections/hollows for making a different pattern of creasing lines. Therefore the machine can not be quickly adapted and modified for making different patterns of creasing lines.

In order to cope with this drawback, the use of creasing profiles that are applied, for example by adhesive, on the plates in their own turn installed on counter-rotating cylinders is known.

For example, printing machines adapted to carry out creasing operations are known. More in detail, on the two cylindrical surfaces of the counter-rotating printing rollers, a profile band and a counter-profile band corresponding to the first one are installed. The positioning of the profiles and counter-profiles (projections/hollows, also known as male and female type profiles) is carried out by gluing adhesive profiles on plates that are constrained on the surface of the counter-rotating printing rollers by the interposition of a further supporting plate.

Despite such an arrangement of adhesive profiles allows larger versatility and adaptability of the machine, with respect to the other known creasing machines carrying profiles made in one piece with the plates, not even such a system is free from drawbacks.

In fact, the manual application of the adhesive profiles, for example with the aid of a reference grid, has to be done very precisely and accurately, at the risk of mistakes in the perfect match of projections/hollows and in general of female type profiles with the corresponding male type profile.

The need of arranging the profiles in the correct position on two different plates in order to obtain the desired pattern of creasing lines on the card stock, in addition to require high precision by the operator carrying out such an operation, causes unwanted lengthening of the time necessary for carrying out such operations.

Nowadays, in this regard, it has to be noted that, for example in digital printing and in particular in ink jet printing, the need is increasingly felt of making externally customized small batches that thus require making prints different one from another in very short times. For example, in the packaging and micro-packaging field, and in particular in the field of packaging luxury products such as perfumes, jewelry, high quality food and beverage, as well as in the production field of brochures or customized cross folders, there is the need of high flexibility in continuously and rapidly changing products to be made. The new printing technologies on the market can provide such adaptability, however the creasing, as seen, suffers from the drawback of not being quickly adaptable in short times on the basis of different patterns to be made.

It is an object of the present invention to solve the afore briefly discussed drawbacks by providing a method and a device for preparing the creasing plates that allows rapidly and simply, as well as precisely, arranging the creasing profiles depending on the pattern of creasing lines to be made. In addition, it is an object of the present invention to provide a method and a device for preparing creasing plates that allow enhancing the precision and flexibility of making the different creases required in the various production processes.

### BRIEF SUMMARY OF THE INVENTION

These and other objects are achieved by the process and the device according to the respective independent claims 1 and 13. Further characteristics/aspects of the invention can be inferred from the dependent claims.

In particular, an aspect of the present invention provides a process for preparing plates for cylinders to crease items of the paper processing industry, the process comprising the following steps of:
- a) acquiring a pattern of the creasing lines to be made on the item of the paper processing industry;
- b) making, on a reference sheet, through openings depending on the pattern and adapted to position creasing profile elements;
- c) applying the creasing profile elements on the plate at the through openings of the reference sheet that is positioned on the plate.

An advantage of this solution is given by the fact that it allows accelerating the preparation process of the creasing machine, obtaining higher precision, as well as high adaptation flexibility related to the desired pattern of the creasing lines to be made.

In fact, acquiring the pattern or scheme of the creasing lines to be made on the item of the paper processing industry, allows rapidly and simply making the through openings to position the profile elements (i.e. the portions or bands of the creasing profile), depending on the desired pattern to be made. For this reason it is therefore very easy for the user to apply the creasing profiles on the plate by using the through openings made on the reference sheet.

Furthermore, different patterns of creasing lines can be quickly transferred by means of the through openings on the reference sheet in accordance with the use requirements, making the preparation of the creasing plates rapid and easy, as well as very reliable.

It has to be noted that the term "pattern of the creasing lines" is herein used to designate the scheme formed by the desired creasing lines to be obtained on the card stock, or like element of the paper processing industry, in progress.

In the following, the profile elements (i.e. the portions or bands of creasing profile) could also be simply indicated as creasing profiles, referring to the male type profiles, i.e. which are provided with a projecting portion, and referring to the female type profiles, i.e. provided with a hollow or recess, and also in the case the male profile and the female profiles are mutually coupled. It has to be noted also that the expression "acquisition of the creasing lines", is herein and in the following used to denote that a pattern comprising the creasing lines is given as input data to make, on the reference sheet, the through openings at which the creasing profile elements are applied.

It has to be noted that according to a possible embodiment, the pattern of the creasing lines can be provided, and thus acquired, by a control unit, for example by storing in a storage unit, or the pattern can be transferred to the control unit in a known way. The pattern of the creasing lines can be for example enclosed in a file, for example of pdf or other type, that can contain other information for example related to the graphic to be printed on the card stock, to the card stock die-cutting lines, etc. For example, the pattern of the creasing lines can represent a layer of a file enclosing other information.

On the basis of the acquired pattern of the creasing lines (for example provided as input data), the through openings are made on the reference sheet.

It has to be noted that, according to an aspect of the invention, depending on the creasing lines of the desired pattern to be made, the pattern or scheme of the through openings is determined (for example by a control unit software) that allows the creasing profile elements to be positioned. In particular, depending on the creasing lines of the desired pattern to be made, the size and/or shape of the through openings are determined (for example by a control unit software).

According to an aspect of the invention, determining the size and/or shape of the through openings is carried out depending on the typology of the creasing profile elements used. In particular, according to an aspect of the present invention, the creasing profile elements comprise a support on which the projecting portion is arranged (in case of male profile) or on which the hollow is arranged (in case of female profile). It follows that, depending on the creasing lines pattern, the size/shape of the through openings that allow corresponding creasing profile elements to be applied are advantageously determined.

It has therefore to be noted that, according to an aspect of the invention, the implementation of the through openings on the reference sheet is carried out depending on the creasing lines, and in case depending on the type of profile elements that have to be applied on the plate, for example depending on the size and/or shape of the support of the creasing profile element carrying the projecting portion or the hollow on itself.

It has to be noted as well that the reference sheet, or mask, is a "sacrificial" member positioned on the creasing plate to be prepared in order to allow the precise application of the creasing profile elements on the plate itself by means of the through openings made on the reference sheet. According to an aspect of the process, the reference sheet, or mask, is removed from the plate after the creasing profile elements have been applied on the plate, at the through openings of the reference sheet.

According to an aspect of the present invention, the positioning of the reference sheet on the plate is carried out before the step of making the through openings on the reference sheet. In other words, the process comprises a step of positioning the reference sheet on the plate to be prepared, preferably such a step of positioning the reference sheet on the plate is carried out before the step of making the through openings on the reference sheet.

Despite this, it is not to be excluded that the step of positioning the reference sheet on the plate is carried out after the step of making the through openings on the reference sheet.

The positioning step provides for keeping in position the reference sheet on the plate, such that the relative position is kept between these two elements. For example, according to an embodiment, the reference sheet is removably constrained, for example by glue or adhesive, on the plate. Preferably, the adhesive is arranged on the reference sheet and doesn't leave residues on the plate following the removal of the reference sheet from the plate, after the application of the creasing profile elements on the plate at the through openings obtained on the reference sheet.

According to an aspect of the present invention, the making of through openings on the reference sheet depending on the pattern of the creasing lines, for the positioning of the creasing profile elements, is carried out by cutting means, preferably by laser, intended to cut the reference sheet.

The use of a laser source has the advantage of ensuring high precision as well as speed of execution of the through openings without leaving residues on the plate, that could otherwise impair the correct application of the creasing profile elements on the plate itself.

According to an aspect of the present invention, the making on the reference sheet of through openings depending on the pattern of the creasing lines, provides for carrying out the cut (incision) of the perimeter of the through openings or the perimeter of portions or segments of the through openings and the subsequent, preferably manual, removal of the parts of the reference sheet enclosed within such a perimeter. By doing so, upon the removal of such portions of the reference sheet, the through openings, i.e. preferably straight "missing" portions of the reference sheet, will remain and expose the underlying plate for the application of the creasing profile elements.

As mentioned, according to an aspect of the present invention, the cut of the perimeter or of perimeter portions is carried out so as to take account of the shape and/or size of the male/female profile elements to be applied to the plate.

In fact, as discussed above, according to an aspect of the present invention, depending on the shape and/or size of the creasing profiles, for example if they comprise supports having hexagonal shape, the pattern of the through openings will be determined so as to make the creasing lines of the acquired pattern.

A further aspect of the present invention relates to a device for preparing plates for cylinders to crease items of the paper processing industry. The device comprises a control unit adapted to acquire a pattern of the creasing lines to be made on the item of the paper processing industry; a reference sheet; means, preferably of laser type, to make through openings on the reference sheet depending on the pattern, where said openings are adapted to position creasing profile elements.

The device further comprises a supporting table for a plate to be prepared on which the creasing profile elements are applied at the through openings of the reference sheet. The supporting table comprises means to keep the plate placed on the same in the desired position, preventing it from unwanted displacements.

Such keep-in-position means can consist of, for example, suctioning means or reference pegs, or blocking electro-magnets or other mechanical means.

As already discussed referring to the process, advantageously the making on the reference sheet of the through openings, i.e. of "missing" portions of the reference sheet, preferably by means of laser cut, allows, rapidly and easily and at the same time very accurately, to make the creasing plates depending on the desired pattern of the creasing lines.

By doing so, the creasing machine on which the plates are installed is very versatile and quickly adaptable to the different patterns which the different production processes need.

As mentioned, the process object of the present invention can be advantageously carried out with the preparation device according to the present invention.

Furthermore, it has to be noted that aspects/characteristics herein described/claimed referring to the process can be applied to the device, and vice versa.

The present invention also relates to a creasing machine to crease items of the paper processing industry, comprising a couple of counter-rotating cylinders on both which a creasing plate is positionable. The machine is associated to a device for preparing plates herein described and/or claimed.

### BRIEF DESCRIPTION OF THE FIGURES

Further characteristics and advantages of the invention will be evident by reading the following description provided for illustration purposes and without limitation, with the aid of the figures illustrated in the attached tables, wherein:
- figure 1 is a schematic representation of a creasing machine;
- figure 2 shows a laser cutting operation of a reference sheet, according to an implementation of the invention;
- figure 2a shows a cutaway detail of the reference sheet incised according to the process illustrated in the preceding figure;
- figure 3 is an exploded view of a supporting table, a plate and a reference sheet, according to an implementation of the invention;
- figure 4 shows a creasing assembly resulting from the assembling shown in the preceding figure;
- figure 5 shows the arrangement of a male profile on the creasing assembly of figure 4;
- figure 6 shows a section of the creasing assembly to which a male creasing profile has been applied, by following the process illustrated in the preceding figure;
- figure 7a shows a male profile and a female profile coupled and ready to be applied according to an aspect of the process of the present invention;
- figure 7b shows a step of applying a male profile and a female profile, coupled one to another, on a plate placed on a supporting table;
- figure 7c shows a male profile viewed from top;
- figure 7d shows two male profiles viewed from top and relatively arranged to make two creasing lines tilted one to another by an angle smaller than 90°;
- figure 8 shows a couple of rollers composed of a first rotating cylinder having a metal plate provided with a male profile coupled to a female profile and of a second rotating cylinder having a smooth metal plate;
- figure 9 shows a couple of rollers composed of a first rotating cylinder having a metal plate provided with a male profile and of a second rotating cylinder having a metal plate provided with a female profile; and
- figure 10 shows a block diagram of a possible implementation of the process of the invention.

### DETAILED DESCRIPTION OF SOME EMBODIMENTS OF THE PRESENT INVENTION

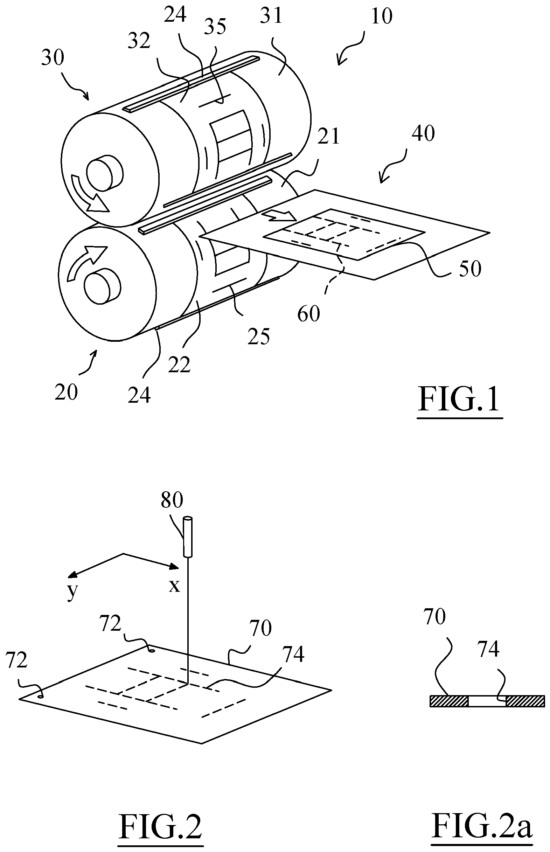

Figure 1 schematically represents a creasing machine to crease items of the paper processing industry, such as cardboards and card stocks and the like, according to an implementation of the present invention.

The creasing is carried out by using a creasing machine 100 comprising a couple of counter-rotating cylinders 10.

The couple of cylinders 10 is composed of a lower cylinder 20 and an upper cylinder 30 which rotate about their own symmetry axis in opposite direction, by means of convenient moving means not shown.

On the outer surface of the upper cylinder 31 an upper plater 32 is positioned by fastening means 24, whereas on the outer surface of the lower cylinder 21 a lower plate 22 is positioned by fastening means 24.

The upper plate 32 and the lower plate 22 are preferably composed of flexible metal elements having, for example, thickness of 0.25 mm, that can be shaped respectively on the outer surface of the upper cylinder 31 and on the outer surface of the lower cylinder 21. Other thicknesses can be used according to the needs. Several materials can be used for making the plates 22, 32, as mentioned they are preferably of metal material, and for example steel.

On the upper plate 32 creasing profile elements (portions) and in particular male type profiles 35 are constrained, preferably by gluing, whereas on the lower plate 22 creasing profile elements (portions) and in particular female type profiles 25 are glued. Of course the opposite arrangement can also be provided, wherein on the upper plate 32 the female profiles 25 are constrained, whereas on the lower plate 22 the male profiles 35 are constrained.

The male type profiles 35 form projections on the upper plate 32, whereas the female type profiles form hollows (recesses) on the lower plate 22. The male profiles 35 and the female profiles 25 are preferably made of plastic material, or plastic material with metal core.

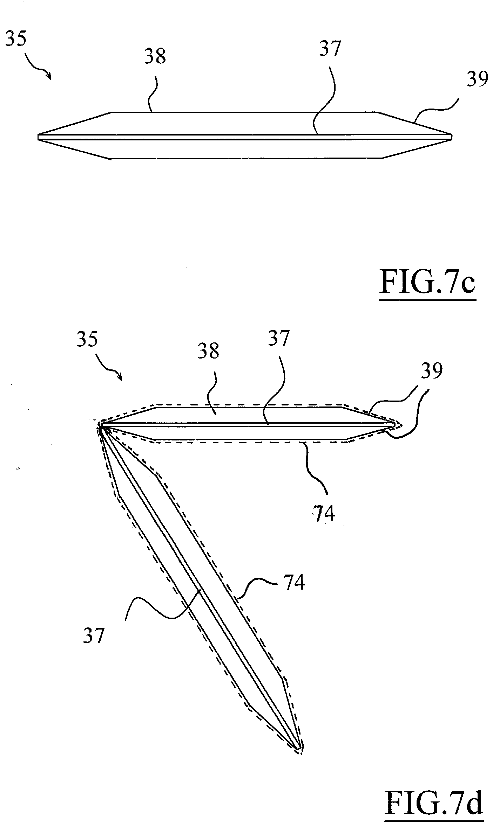

According to a possible embodiment, as for example visible in the top views of figures 7c and 7d, the male and female profile elements comprise a support 38 on which the projecting portion 37 is arranged (for example a straight ridge for forming the male type profile), or on which the hollow (straight seat) is obtained for forming the female type profile. It has to be noted that the support 38 can take different shapes if viewed in top plan view. For example, according to a possible embodiment (such as for example shown in figures 7c, 7d), the plan shape of the support 38 of a creasing profile element is not rectangular, but shows for example a hexagonal configuration with oblique sides 39 at its ends, that preferably define a corner equal to or smaller than 90°. In general, the plan shape of the support 38 of the creasing profile can include at least one tilted side to allow the approaching installation with at least one tilted side of a support 38 of a further creasing profile.

Preferably, the elements (portions) of male profile 35 and female profile 25 are self-adhesive and are glued to the respective metal plates. In fact, according to a possible embodiment, the male profiles and the female profiles comprise a layer of adhesive material arranged on their outer surface intended to be constrained to the plate. The adhesive layer is preferably protected by a removable film 27 and 27'.

Once the rotation of the couple of rollers 10 has been activated, the interposition of an item of the paper processing industry, such as for example a cardboard 40 or a greeting card or a card stock to make packaging or micro-packaging little boxes or other item of the paper processing industry, among the male profiles 35 of the upper cylinder 32 and the complementary female profiles 25 of the lower cylinder 22, allows the creasing 60 on the cardboard 40 to be carried out.

Of course, it has to be noted that the distance between the upper cylinder 32 and the lower cylinder 22 can be adjusted depending on the thickness of the cardboard 40 to be worked.

According to an aspect of the present invention, the gluing of the male (or female) profiles 35 on the upper plate 32 (or on the lower plate) is guided by a reference sheet 70. In other words, the gluing of the portions, or elements, of male (or female) profile 35 on the upper plate 32 (or on the lower plate), is guided by a reference sheet 70.

As also pointed out in the following, the reference sheet 70 is of sacrificial type, meaning that it is used as a mask to allow the creasing profile elements 25, 35 to be applied on the plates 22, 32 at the through openings 74, and is then removed from the plate.

The reference sheet 70 can be made of plastic material.

According to an aspect of the invention, the reference sheet 70 can be made of polystyrene, for example extruded polystyrene, or of polyester. However other plastic materials are possible. The thickness of the reference sheet is conveniently selected to allow the precise and sharp making of the through openings in the sheet itself, preferably by means of laser type cutting means, as it will be seen better in the following. For example, a reference sheet 70 made of polystyrene having thickness of about 3 mm can be used.

The reference sheet 70 can be glued on the respective metal plate before the machining, and in particular before making the through openings. The gluing is made by glue that doesn't leave residues on the metal plate. Such a gluing aims to keep the relative alignment between the reference sheet 70 and the plate it is applied to. The subsequent separation of the reference sheet 70 from the plate is as easy as removing any semi-adhesive sheet.

Such as for example shown in figure 2, a reference sheet 70, for example a polystyrene sheet, is cut by cutting means, preferably by means of a laser 80. According to an aspect of the invention a laser cutting head is used, for example a laser cutting head preferably moved in a X-Y plan (for example a laser plotter). The movement plane is preferably parallel to the reference sheet 70 on which the through openings are made. The laser cutting head 80 can be advantageously arranged above the supporting table 90 on which the plate having the reference sheet 70 positioned thereon is arranged. The movement of the laser cutting head 80 occurs in a plan parallel to the plan of the supporting table 90.

A section view of a detail of the reference sheet 70 and of a through opening 74 obtained therein is shown in figure 2a. In particular, it has to be noted that the through openings 74 are obtained so that to pass through the reference sheet to form "missing" portions generally having straight extension, so as to make the underlying plate visible. The cut effected to make the through openings, if effected when the reference sheet is already positioned on the plate, is made so as not to affect and thus not indent the underlying plate.

It has to be noted that, according to an aspect of the present invention, the making of the through openings preferably by the laser cutting head 80, is carried out by cutting the perimeter of the through openings, or cutting the perimeter of portions or segments of the through openings. The parts of the reference sheet 70 enclosed within the obtained perimeter are removed so as to form said through openings 74 in the reference sheet, thus making the underlying plate exposed for the application of the creasing profile elements 25, 35, i.e. of the portions of male/female profile.

Advantageously, according to an aspect of the present invention, the pattern of the through openings 74 made on the reference sheet 70 to position the creasing profiles is determined and then made depending on the pattern 50 of the creasing lines. The pattern 50 can be stored in a storage unit 130 combined with a control unit 110.

As discussed above, the pattern of the through openings 74, and in particular the shape and/or the size of the through openings 74 or their portions or segments, are determined depending on the pattern 50 of the creasing lines intended to be made. The determination of the shape and the size of the through openings 74 can be advantageously carried out by the control unit 110, depending on the pattern 50 of the creasing lines to be made.

In other words, the pattern of the through openings, and thus the pattern of the creasing profile elements to be applied to the plate via the corresponding through openings, is indeed defined depending on the pattern 50 of the desired creasing lines to be made and is therefore determined or computed starting therefrom.

For example, the shape and size of the through openings can be determined depending on the shape and size of the creasing profile applied onto the plate. More in detail, for example the size and the shape of the support 38 of the creasing profile (on which the projecting portion or the hollow is obtained) are taken into account for the determination of the shape and size of the through openings 74 for making the creasing lines in accordance with the acquired pattern 50.

For example, according to an embodiment, the profile shape is not rectangular but of the type shown in figure 7c, where a male profile 35 viewed from top is shown.

In particular, the profile has a projecting portion 37 positioned on a support 38, where the support 38 is not rectangular but has a hexagonal shape with, at its ends, oblique sides 39 defining an angle equal to or smaller than 90°, preferably an acute angle smaller than 45°.

According to an implementation of the invention, the cut made by this angle is obtained with a proper tool combined or integral with a profile dispenser 200.

As visible in figure 7d, which shows a top view of a coupling between two male profiles to make two creasing lines tilted one to another, such an angle between the sides 39 allows the projecting portions 37 of the profiles to get closer and to be tilted one to another at angles smaller than 90°. By doing so, it is possible for example to make creasing lines with angles therebetween smaller than 90°.

It has to be noted that the creasing lines of the pattern 50 preferably correspond to the projecting portions 37 or hollows (not shown), that are arranged on the support 38. The through openings 74 to be made on the reference sheet, i.e. the "missing" portions of the reference sheet having generally straight extension, will be made such that the support 38 can be inserted in the same and that the projecting portion 37 (or the hollow) arranged on the support 38 determines the desired creasing line depending on the pattern 50.

The same concepts related to the support shape can be applied to the female profiles, where a corresponding hollow portion (not represented in the figures for the sake of simplicity) replaces the projecting portion.

According to an aspect of the present invention, the movement of the laser cutting head 80 and in general of the cutting means, is controlled by the control unit 110 that acquired the pattern 50 of the creasing lines, depending on which the through openings 74 are made on the reference sheet 70.

It has to be noted as well that, according to an aspect of the present invention, the cutting means and in particular the laser type cutting means 80 can be used to mark, on the reference sheet 70, one or more reference holes 72 and/or reference numerals 73.

In fact, according to an aspect of the present invention, in a storage unit 130 connected to the control unit 110, numeral signs are stored to identify the positioning order of creasing profiles and said numeral signs can also be made by cutting, preferably laser cutting, the reference sheet 70.

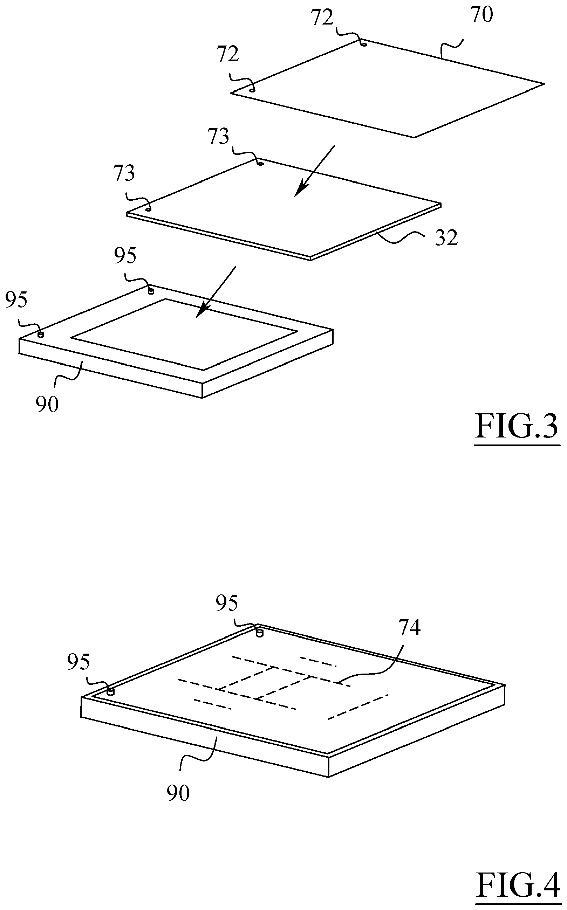

Figure 3 shows in exploded view the reference sheet 70, the upper plate 32 and a supporting table 90. As mentioned, according to a possible embodiment the reference sheet 70 is positioned, preferably removably glued, on the respective metal plate before the machining, and in particular before the making of the through openings. The plate 32, on which the reference sheet 70 has been positioned, is fastened to a supporting table 90 by means of reference pins (or pegs) 95 inserted in reference holes 73 of the plate, such as to form an assembly 92 comprising the plate with the reference sheet positioned thereon, the plate in turn being arranged on the supporting table 90, in the following such assembly is also called creasing assembly 92.

The reference pins or pegs 95 engage with the respective reference holes 73 being on the plate 32, and possibly with the reference holes 72 made in the reference sheet 70.

The creasing assembly 92 allows the male profiles 35 to be precisely and effectively positioned on the upper plate 32 by exploiting the through openings 74 and the reference numbers 73, where provided.

As mentioned, according to a preferred embodiment, the step of positioning the reference sheet 70 on the plate is carried out before the step of making the through openings 74 on the reference sheet 70. In such a case, the through openings 74 are preferably carried out on the sheet positioned on the plate that is in turn arranged on the supporting table 90. However, as already discussed above, it is not excluded that the positioning of the reference sheet on the plate could be carried out after making the through openings 74 on the reference sheet.

According to a possible embodiment, a dispenser 200 is provided and coupled to a control unit 110 for dispensing the elements of the male type and/or female type profiles.

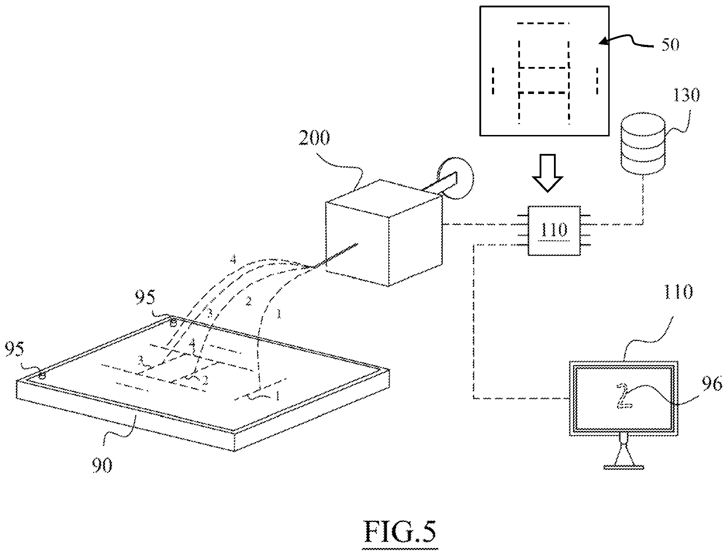

More in detail, according to a possible embodiment, such as for example depicted in figure 5, male profile elements 35 are dispensed by a dispenser 200 coupled to a control unit 110. The control unit 110 is combined with a storage unit 130. The dispenser 200 can dispense creasing profile elements (portions) of a length suitable to be arranged in an established through opening 74, i.e. of the length that allows obtaining an established portion, or segment, of the creasing pattern.

The control unit 110 determines the dispensing order of the male profile portions 35 by the dispenser 200 and displays, on a screen 140, the reference numeral 96 of the through opening 74 inside which the corresponding profile portion dispensed by the dispenser 200 has to be inserted.

In this way there is a unique relation between the profile portion dispensed by the dispenser 200, and in particular its length, and the through opening 74 of the polyester sheet 70 inside which it has to be inserted.

The gluing operation can be carried out by an operator but can be driven by the control unit 110 organizing the dispensing order from the dispenser. According to an aspect of the present invention, the gluing operation is driven by the control unit 110 displaying, on a screen 140, the creasing pattern to facilitate the application by the user.

According to a possible embodiment, the control unit 110 displays on a screen 140 the reference numeral - in the example of fig. 5 the number 2 - of the through opening 74, in which the male profile portion 35 produced by the dispenser 200 has to be inserted, in order to aid the operator and speed the operations.

By gluing all the portions (elements) of male profile 35 in the respective through openings 74, the operator completes the male profile 35 depending on the desired pattern of the creasing lines 50 to be made.

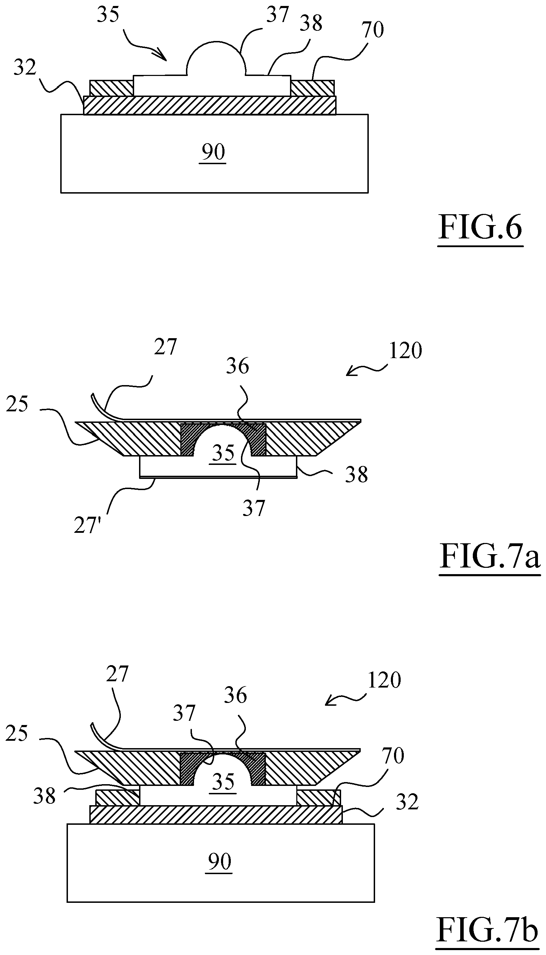

In figure 6 a section of the creasing assembly 92 is shown once the male profiles 35 have been introduced in the through openings 74.

Once the male profiles 35 have been glued on the upper plate 32, the polyester sheet 70 is removed.

By following the same process used for the upper plate 32, the lower plate 22 can be provided with female profiles 25.

The upper plate 32 provided with male profiles 35 is detached from the supporting table 90 and fastened to the upper cylinder 30 by the fastening means 24.

By following the same process used for the upper plate 32, the lower plate 22 can be provided with female profiles 25 and fastened to the lower cylinder 20 by the fastening means 24.

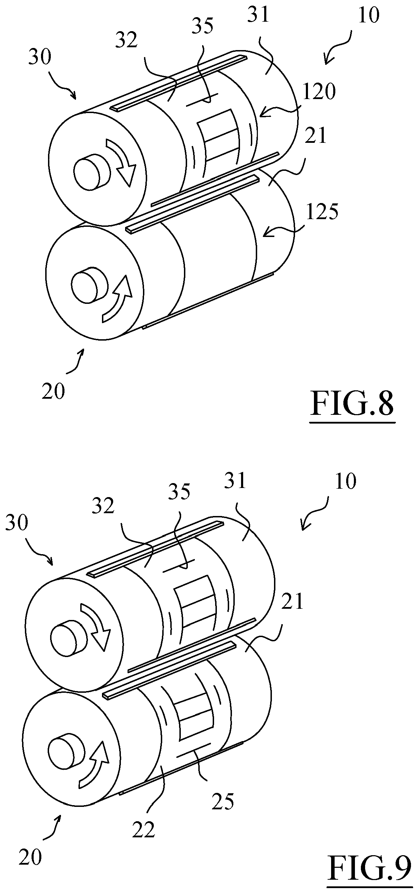

The described step of preparing the couple of rollers 10 is depicted in figure 8 and is carried out with the upper cylinder 30 and the not-rotating lower cylinder 20.

The male profiles 35 are glued to the upper plate 32 that is positioned by the fastening means 24 on the outer surface of the upper cylinder 31, whereas the female profiles 25 are glued to the lower plate 22 that is positioned on the outer surface of the lower cylinder 21 by the fastening means 24.

By rotating the couple of rollers 10, the creasing of the cardboard 40 can be carried out.

In another implementation of the present invention - for example visible in figure 7a - the female profiles 25 are not applied directly to the lower plate 22 but are coupled to the complementary male type profiles 35. In general, it has to be noted that, according to a possible embodiment, the male/female profiles are coupled together thus one of the two profiles (male or female) is arranged on the plate in the through openings 74 of the reference sheet 70 that is positioned on the plate, carrying the complementary profile coupled thereon. By doing so, the complementary profile is applied on the second plate without the use of a reference sheet for the second plate.

As visible for example in figure 7a, the manufacturer can provide the female profiles 25 already coupled with the respective male profiles 35, possibly with interposition of a removable connecting element 36.

Such an assembly of elements and in general the male profiles 35 coupled to the complementary female profiles 25, forms a group of complementary profiles 120. The group of complementary profiles 120 can be dispensed in such a coupled configuration by the dispenser 200.

Figure 7b shows a step of applying a male profile and a female profile, already coupled one to another, on a plate 32 placed on a supporting table 90.

The group of complementary profiles 120 is then placed on a mask consisting of the reference sheet 70 positioned on the plate to reproduce the required creasing profile. It has to be noted that the user will select whether to apply the male profile 35 or the female profile 25 of the group of coupled profiles 120 on the plate.

This solution has the advantage of requiring one mask only and thus only one reference sheet 70 subsequently removed.

For example, the group of coupled profiles 120 is applied on the plate 32, with the male profile 35 applied on the plate 32 at the through openings 74 of the reference sheet 70 that is positioned on the plate.

At this point, in order to position the complementary profiles on the second plate and thus to position the female profiles 25 on the lower plate 22, the lower plate 22 can be positioned over the female profiles 25, the two plates can be separated with the respective complementary male and female profiles attached, and the two plates can be mounted, each one on the respective cylinder.

Alternatively, the plate 32 on which the group of complementary coupled profiles 120 has been applied, with the male profile 35 applied on the plate 32, is fastened to the upper cylinder 30 by the fastening means 24.

On the lower cylinder 20 the lower plate 22 is positioned by the fastening means 24.

In figure 8, the couple of rollers 10 is shown wherein the upper plate 32 has the group of profiles 120 and the lower plate 22 applied thereon, the lower plate having a smooth surface 125 and being positioned by the fastening means 24 on the outer surface of the lower cylinder 21.

Finally, as for example shown in figure 9, by starting the rotation of the couple of rollers 10, the group of profiles 120 contacts the lower plate 22 and the female profiles 25 are transferred thereon. The gluing the female profiles 25 on the lower plate 22 occurs due to the adhesive being on the female profiles 25.

Of course, the gluing can be carried out once the protective film (if any) of the profile adhesive has been removed.

It has to be noted that despite referring to the application on the plate 32 of the male profile 35 having the female complementary profile 25 coupled, the mounting can be provided on the plate 22 of the male profile 35 having the female complementary profile 25 coupled.

In other words, in a further implementation of the present invention, the group of complementary profiles 120 coupled together can be positioned on the lower cylinder 20. According to this second implementation, at the end of the process for preparing the creasing system 100, the female profiles 25 will be on the upper cylinder 30 whereas the male profiles 35 will be on the lower cylinder 20.

It has to be noted as well that the female profile 25, having the male complementary profile 35 coupled, can be applied to one of the plates 32, 22 provided with a reference sheet 70, and the complementary profile can be "transferred" on a plate not provided with a reference sheet.

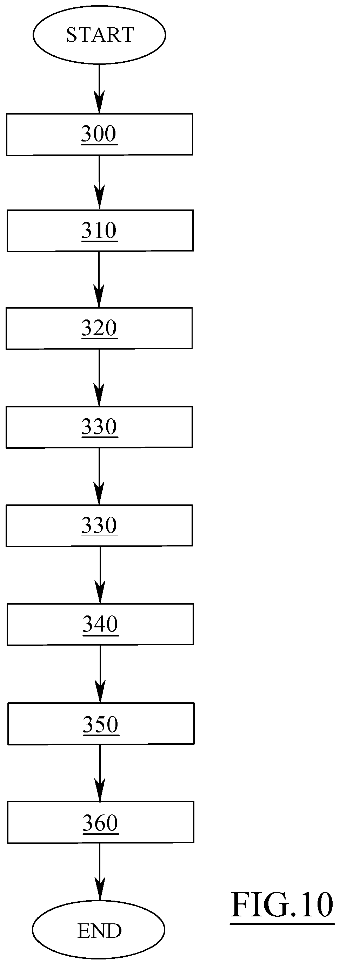

Finally, figure 10 shows a block diagram of a possible implementation of the process of the invention.

In particular, the process according to the not limiting possible embodiment of figure 10 comprises a step of acquiring, by a control unit 110, for example in a storage unit 130 combined with the same, a pattern 50 of creasing lines. Optionally, such a step can also provide the storage of numeral signs 96 to identify the positioning order of creasing profile elements (block 300).

These steps can serve for example to acquire a file in one of the known formats, for example the pdf. format, containing a plurality of information such as for example the graphics of the pattern to be printed on the cardboard, a layer with the profile to be die-cut and another layer containing the creasing lines.

According to an aspect of the invention, in the process, the creasing layer is automatically selected and from the creasing lines the pattern of the through openings 74 to be made is determined, for example the shape (for example hexagonal) and/or the size (for example the length) of the support 38 of the creasing profile to be applied on the plate, in order to obtain one or more creasing lines of the pattern 50, is/are determined. The shape and/or size are used by the cutting means, for example by the laser, to correspondingly cut the through openings in the reference sheet 70. The shape and/or size are also used by the profile dispenser 200 to dispense the profile to be applied on the plate in the corresponding through opening.

A plate 22, 32 to be prepared is positioned on a supporting table 90 (block 310) with a reference sheet 70 positioned thereon (block 320).

Subsequently, a step of making the through openings 74 corresponding to the pattern 50 on a reference sheet 70 and being adapted to position the creasing profile elements 25, 35 and of making the numeral signs (block 330) is carried out.

As mentioned above, the step of positioning the reference sheet 70 on the plate can be carried out before or after the step of making the through openings 74 on a reference sheet 70.

As mentioned, the step of making the through openings 74 on a reference sheet 70 depending on the pattern 50 is preferably carried out by laser, and in particular a laser head 80 that can be moved in a known way to make the through openings 74.

A dispenser 200 is therefore actuated through a control unit 110, to dispense the creasing profile elements 25, 35 according to the order stated by the numeral signs 96 (block 340), and the numeral signs are displayed for positioning the creasing profile elements 25, 35 (block 350). It has to be noted that such steps are optional, in fact, the creasing profiles of the desired size can be conveniently and manually cut starting from a continuous profile and their application can be done without the aid of the numeral signs. Finally, creasing profile portions (elements) 25, 35 are applied on the plate 22, 32 at the through openings 74 of the reference sheet 70 (block 360). The time estimated for preparing 80 creasing segments according to the process of the present invention is 40 minutes; 30 minutes are required for preparing the group of profiles 120 and 10 minutes for mounting the group of profiles 120 on one of the cylinders of the couple of rollers 10. The data shown relate to a particular implementation of the invention and are not limiting of the performances that can be obtained by virtue of the various implementations of the invention.

As described above, the application of the creasing profiles of a plate can be repeated for applying the complementary profiles on the second plate. However, as discussed above, according to an aspect of the present invention, the male and female creasing profiles can be coupled together and thus a (male or female) profile is applied on a plate by carrying the complementary profile on itself. The complementary profile can be applied on the second plate by arranging the second plate over the profile complementary to the one applied on the first plate (for example by applying the second plate 22 on the female profile 25 in the embodiment of figure 7b). By doing so, the complementary profile is applied on the second plate through adhesive, thus avoiding making a reference sheet for the second plate. Alternatively, the application on the second plate of the complementary profile coupled to the male or female profile that has been applied on the first plate, can be carried out by mounting the first plate carrying the group of complementary profiles coupled on a cylinder. By rotating the counter-rotating cylinders, the complementary profile is transferred on the second plate, free from the reference sheet and fastened to the second cylinder.

Of course, in case the male and female profiles are coupled by an element interposed therebetween, such a possible temporary connecting element is removed upon the separation of the male and female profiles applied on the respective plates.

Obviously, modifications or improvements suggested by incidental or particular reasons can be made to the previously described invention, without thereby departing from the scope of the claims.

For example, it has to be noted that a plurality of through openings are preferably made on the reference sheet for applying the creasing profile elements, however it is not excluded that a through opening is made on the reference sheet for the application of one or more creasing profile elements.

## Claims

1. Process for preparing plates (22, 32) for cylinders (20, 30) to crease items (40) of the paper processing industry, the process comprising the following steps of:
- a) acquiring a pattern (50) of the creasing lines to be made on the item (40) of the paper processing industry, **characterised by** the following steps of:
- b) making, on a reference sheet (70), through openings (74) depending on the pattern (50) of the creasing lines, the through openings (74) being adapted to position creasing profile elements (25, 35);
- c) applying the creasing profile elements (25, 35) on the plate (22, 32) at the through openings (74) of the reference sheet (70), the reference sheet being positioned on the plate (22, 32).

2. Process according to claim 1, wherein the positioning of the reference sheet (70) on the plate (22, 32) is carried out before said step b) of making the through openings (74) on the reference sheet (70) or is carried out after said step b) of making the through openings (74) on the reference sheet (70).

3. Process according to claim 1 or 2, wherein a step of dispensing the creasing profile elements (25, 35) to be applied on the plate (22, 32) is provided by a dispenser (200).

4. Process according to any one of the preceding claims, wherein a step of making numeral signs (96) on the reference sheet (70) is provided to identify the positioning order of the creasing profile elements (25, 35).

5. Process according to claim 3 or 4, wherein a step of activating the dispenser (200) is provided to dispense the creasing profile elements (25, 35) in accordance with the order set by the numeral signs (96).

6. Process according to claim 4 or 5, wherein the step of applying the creasing profile elements (25, 35) on the plate (22, 32) at the through openings (74) of the reference sheet (70) occurs in accordance with the order set by the numeral signs (96).

7. Process according to any one of the preceding claims, wherein the step of making through openings (74) on the reference sheet (70) for the positioning of the creasing profile elements (25, 35) is carried out by cutting means (80), preferably of laser type.

8. Process according to any one of the preceding claims, wherein the step of making through openings (74) on the reference sheet (70) for the positioning of the creasing profile elements (25, 35) provides for the cutting of the perimeter of the through openings (74) or for the cutting of the perimeter of portions, or segments, of the through openings (74), and for the subsequent removal of the part of reference sheet enclosed in said perimeter.

9. Process according to claim 4, wherein the step of making numeral signs on the reference sheet (70) for identifying the positioning order of the creasing profile elements is carried out by cutting means (80), preferably of laser type.

10. Process according to any one of the preceding claims, wherein a step of displaying the pattern (50) of the creasing lines to be made on the item (40) of the paper processing industry and/or of displaying the numeral signs for the positioning of the creasing profile elements (25, 35) is provided by a screen (140) controlled by the control unit (110).

11. Process according to any one of the preceding claims, wherein a complementary creasing profile (25, 35) is applied on the creasing profile (25, 35) of male or female type.

12. Process according to any one of the preceding claims, wherein the reference sheet (70) is made of plastic material, preferably the plastic material of the reference sheet (70) is polystyrene or polyester.

13. Device for preparing plates (22, 32) for cylinders (20, 30) to crease items (40) of the paper processing industry, wherein the device comprises:
- a control unit (110) adapted to acquire a pattern (50) of the creasing lines to be made on the item (40) of the paper processing industry;
- a reference sheet (70); **characterised by**
- means (80), preferably of laser type, to make through openings (74) on the reference sheet (70) depending on the pattern (50) of the creasing lines, where said through openings are adapted to position creasing profile elements (25, 35); and
- a supporting table (90) for a plate (22, 32) to be prepared, the creasing profile elements (25, 35) being applied on the latter at the through openings (74) of the reference sheet (70) positioned on the plate (22, 32).

14. Device according to claim 13, comprising a dispenser (200) for dispensing the creasing profile elements (25, 35) to be applied on the plate (22, 32).

15. Creasing machine to crease items (40) of the paper processing industry, comprising a couple of counter-rotating cylinders (10) on both which a creasing plate (22, 32) is positionable, where the machine is combined with a device for preparing plates (22, 32) according to claim 13 or 14.

## Patentansprüche

1. Verfahren zur Herstellung von Platten (22, 32) für Zylinder (20, 30) zum Falten von Gegenständen (40) der papierverarbeitenden Industrie, wobei das Verfahren die folgenden Schritte umfasst:
- a) Erfassen eines Musters (50) der Faltlinien, die auf dem Gegenstand (40) der papierverarbeitenden Industrie hergestellt werden sollen; **dadurch gekennzeichnet, dass** dieses die folgenden Schritte umfasst:
- b) Herstellen von Durchgangsöffnungen (74) auf einem Referenzblatt (70) in Abhängigkeit von dem Muster (50) der Faltlinien, wobei die Durchgangsöffnungen (74) angepasst werden, um Faltenprofilelemente (25, 35) zu positionieren;
- c) Aufbringen der Faltprofilelemente (25, 35) auf die Platte (22, 32) an den Durchgangsöffnungen (74) des Referenzblatts (70), wobei das Referenzblatt auf der Platte (22, 32) positioniert wird.

2. Verfahren nach Anspruch 1, wobei das Positionieren des Referenzblatts (70) auf der Platte (22, 32) vor dem Schritt b) des Herstellens der Durchgangsöffnungen (74) auf dem Referenzblatt (70) durchgeführt wird oder nach dem Schritt b) des Herstellens der Durchgangsöffnungen (74) auf dem Referenzblatt (70) durchgeführt wird.

3. Verfahren nach Anspruch 1 oder 2, wobei ein Schritt des Abgebens der auf der Platte (22, 32) aufzubringenden Faltprofilelemente (25, 35) von einem Spender (200) bereitgestellt wird.

4. Verfahren nach einem der vorhergehenden Ansprüche, wobei ein Schritt des Herstellens von Zahlenzeichen (96) auf dem Referenzblatt (70) vorgesehen ist, um die Positionierungsreihenfolge der Faltprofilelemente (25, 35) zu identifizieren.

5. Verfahren nach Anspruch 3 oder 4, wobei ein Schritt des Aktivierens des Spenders (200) vorgesehen ist, um die Faltprofilelemente (25, 35) gemäß der durch die Zahlenzeichen (96) festgelegten Reihenfolge abzugeben.

6. Verfahren nach Anspruch 4 oder 5, wobei der Schritt des Aufbringens der Faltprofilelemente (25, 35) auf der Platte (22, 32) an den Durchgangsöffnungen (74) des Referenzblatts (70) gemäß der durch die Ziffern (96) festgelegten Reihenfolge erfolgt.

7. Verfahren nach einem der vorhergehenden Ansprüche, wobei der Schritt des Herstellens der Durchgangsöffnungen (74) auf dem Referenzblatt (70) zum Positionieren der Faltprofilelemente (25, 35) durch Schneidmittel (80), vorzugsweise vom Lasertyp, ausgeführt wird.

8. Verfahren nach einem der vorhergehenden Ansprüche, wobei der Schritt des Herstellens der Durchgangsöffnungen (74) auf dem Referenzblatt (70) zum Positionieren der Faltprofilelemente (25, 35) das Schneiden des Umfangs der Durchgangsöffnungen (74) oder das Schneiden des Umfangs von Abschnitten oder Segmenten der Durchgangsöffnungen (74) und das anschließende Entfernen des in diesem Umfang eingeschlossenen Teils des Referenzblatts erlaubt.

9. Verfahren nach Anspruch 4, wobei der Schritt des Herstellens von Zahlenzeichen auf dem Referenzblatt (70) zum Identifizieren der Positionierungsreihenfolge der Faltprofilelemente durch Schneidmittel (80), vorzugsweise vom Lasertyp, ausgeführt wird.

10. Verfahren nach einem der vorhergehenden Ansprüche, wobei ein Schritt des Anzeigens des Musters (50) der auf dem Gegenstand (40) der papierverarbeitenden Industrie vorzunehmenden Faltlinien und/oder des Anzeigens der Zahlenzeichen zum Positionieren der Faltprofilelemente (25, 35) von einem von der Steuereinheit (110) gesteuerten Bildschirm (140) bereitgestellt wird.

11. Verfahren nach einem der vorhergehenden Ansprüche, wobei ein komplementäres Faltprofil (25, 35) auf das Faltprofil (25, 35) vom männlichen oder weiblichen Typ angewendet wird.

12. Verfahren nach einem der vorhergehenden Ansprüche, wobei das Referenzblatt (70) aus Kunststoffmaterial besteht, wobei das Kunststoffmaterial des Referenzblatts (70) vorzugsweise Polystyrol oder Polyester ist.

13. Vorrichtung zum Herstellen von Platten (22, 32) für Zylinder (20, 30) zum Falten von Gegenständen (40) der papierverarbeitenden Industrie, wobei die Vorrichtung umfasst:
- eine Steuereinheit (110), die zum Erfassen eines Musters (50) der Faltlinien, die auf dem Gegenstand (40) der papierverarbeitenden Industrie gemacht werden sollen, angepasst ist;
- ein Referenzblatt (70); **gekennzeichnet, durch**
- Mittel (80), vorzugsweise vom Lasertyp, zum Herstellen von Durchgangsöffnungen (74) auf dem Referenzblatt (70) in Abhängigkeit von dem Muster (50) der Faltlinien, wobei diese Durchgangsöffnungen zum Positionieren von Faltprofilelementen (25, 35) angepasst sind; und
- einen Stütztisch (90) für eine herzustellende Platte (22, 32), wobei die Faltprofilelemente (25, 35) auf letzteres an den Durchgangsöffnungen (74) des Referenzblatts (70), das auf der Platte (22, 32) positioniert ist, aufgebracht werden.

14. Vorrichtung nach Anspruch 13, umfassend einen Spender (200) zum Abgeben der auf die Platte (22, 32) aufzubringenden Faltprofilelemente (25, 35).

15. Faltmaschine zum Falten von Gegenständen (40) der papierverarbeitenden Industrie, umfassend ein paar gegenläufige Zylinder (10), auf denen beide eine Faltplatte (22, 32) positionierbar ist, wobei die Maschine mit einer Vorrichtung zum Herstellen von Platten (22, 32) nach Anspruch 13 oder 14 kombiniert ist.

## Revendications

1. Procédé de préparation de plaques (22, 32) pour des cylindres (20, 30) pour rainer des articles (40) de l'industrie papetière, le procédé comprenant les étapes suivantes consistant à :
- a) acquérir un motif (50) des lignes de rainage à réaliser sur l'article (40) de l'industrie papetière, **caractérisé par** les étapes suivantes consistant à :
- b) réaliser, sur une feuille de référence (70), des ouvertures traversantes (74) en fonction du motif (50) des lignes de rainage, les ouvertures traversantes (74) étant adaptées pour positionner les éléments de profil de rainage (25, 35) ;
- c) appliquer les éléments de profil de rainage (25, 35) sur la plaque (22, 32) au niveau des ouvertures traversantes (74) de la feuille de référence (70), la feuille de référence étant positionnée sur la plaque (22, 32).

2. Procédé selon la revendication 1, dans lequel le positionnement de la feuille de référence (70) sur la plaque (22, 32) est effectué avant ladite étape b) de réalisation des ouvertures traversantes (74) sur la feuille de référence (70) ou est effectué après ladite étape b) de réalisation des ouvertures traversantes (74) sur la feuille de référence (70).

3. Procédé selon la revendication 1 ou 2, dans lequel une étape de distribution des éléments de profil de rainage (25, 35) à appliquer sur la plaque (22, 32) est assurée par un dispositif de distribution (200).

4. Procédé selon l'une quelconque des revendications précédentes, dans lequel une étape de fabrication de signes numériques (96) sur la feuille de référence (70) est prévue pour identifier l'ordre de positionnement des éléments de profil de rainage (25, 35).

5. Procédé selon la revendication 3 ou 4, dans lequel une étape d'activation du dispositif de distribution (200) est prévue pour distribuer les éléments de profil de rainage (25, 35) conformément à l'ordre défini par les signes numériques (96).

6. Procédé selon la revendication 4 ou 5, dans lequel l'étape d'application des éléments de profil de rainage (25, 35) sur la plaque (22, 32) au niveau des ouvertures traversantes (74) de la feuille de référence (70) se produit conformément à l'ordre défini par les signes numériques (96).

7. Procédé selon l'une quelconque des revendications précédentes, dans lequel l'étape de réalisation d'ouvertures traversantes (74) sur la feuille de référence (70) pour le positionnement des éléments de profil de rainage (25, 35) est réalisée par des moyens de découpe (80), de préférence de type laser.

8. Procédé selon l'une quelconque des revendications précédentes, dans lequel l'étape de réalisation d'ouvertures traversantes (74) sur la feuille de référence (70) pour le positionnement des éléments de profil de rainage (25, 35) prévoit la découpe du périmètre des ouvertures traversantes (74) ou la découpe du périmètre de portions, ou segments, des ouvertures traversantes (74), et l'enlèvement ultérieur de la partie de feuille de référence enfermée dans ledit périmètre.

9. Procédé selon la revendication 4, dans lequel l'étape de réalisation de signes numériques sur la feuille de référence (70) pour identifier l'ordre de positionnement des éléments de profil de rainage est réalisée par des moyens de découpe (80), de préférence de type laser.

10. Procédé selon l'une quelconque des revendications précédentes, dans lequel une étape d'affichage du motif (50) des lignes de rainage à réaliser sur l'article (40) de l'industrie papetière et/ou d'affichage des signes numériques pour le positionnement des éléments de profil de rainage (25, 35) est assurée par un écran (140) commandé par l'unité de commande (110).

11. Procédé selon l'une quelconque des revendications précédentes, dans lequel un profil de rainage complémentaire (25, 35) est appliqué sur le profil de rainage (25, 35) de type mâle ou femelle.

12. Procédé selon l'une quelconque des revendications précédentes, dans lequel la feuille de référence (70) est réalisée en matière plastique, de préférence la matière plastique de la feuille de référence (70) est du polystyrène ou du polyester.

13. Dispositif pour préparer des plaques (22, 32) pour des cylindres (20, 30) afin de rainer des articles (40) de l'industrie papetière, dans lequel le dispositif comprend :
- une unité de commande (110) adaptée pour acquérir un motif (50) des lignes de rainage à réaliser sur l'article (40) de l'industrie papetière ;
- une feuille de référence (70) ; **caractérisé par**
- des moyens (80), de préférence de type laser, pour réaliser des ouvertures traversantes (74) sur la feuille de référence (70) en fonction du motif (50) des lignes de rainage, où lesdites ouvertures traversantes sont adaptées pour positionner les éléments de profil de rainage (25, 35) ; et
- une table de support (90) pour une plaque (22, 32) à préparer, les éléments de profil de rainage (25, 35) étant appliqués sur cette dernière au niveau des ouvertures traversantes (74) de la feuille de référence (70) positionné sur la plaque (22, 32).

14. Dispositif selon la revendication 13, comprenant un dispositif de distribution (200) pour distribuer les éléments de profil de rainage (25, 35) à appliquer sur la plaque (22, 32).

15. Machine de rainage pour rainer des articles (40) de l'industrie papetière, comprenant un couple de cylindres contrarotatifs (10) sur lesquels une plaque de rainage (22, 32) peut être positionnée, où la machine est combinée avec un dispositif pour préparer des plaques (22, 32) selon la revendication 13 ou 14.
